# EUROPÄISCHE PATENTSCHRIFT

(11) **EP 2 510 564 B1**
(45) Veröffentlichungstag und Bekanntmachung des Hinweises auf die Patenterteilung: **14.12.2016**
(21) Anmeldenummer: 10770784.6
(22) Anmeldetag: 14.10.2010
(51) Int. Cl.: H01M 2/10, H01M 10/613, H01M 10/625, H01M 10/6556, H01M 10/6568

(54) **STEUERBAR WÄRMEISOLIERENDES GEHÄUSE UND VERFAHREN ZUR STEUERUNG HIERFÜR**
CONTROLLABLE, THERMALLY INSULATED HOUSING AND METHOD FOR THE CONTROL THEREOF
BOÎTIER À ISOLATION THERMIQUE COMMANDÉE ET PROCÉDÉ DE COMMANDE ASSOCIÉ

(30) Priorität: 09.12.2009 DE 102009047695
(43) Veröffentlichungstag der Anmeldung: 17.10.2012
(73) Patentinhaber: Robert Bosch GmbH, 70442 Stuttgart (DE)
(72) Erfinder: TSCHISMAR, Oliver, 72555 Metzingen (DE)
(86) Internationale Anmeldenummer: PCT/EP2010/065442
(87) Internationale Veröffentlichungsnummer: WO 2011/069723

(56) Entgegenhaltungen:
- CH-A5- 664 037
- DE-A1- 19 648 353
- FR-A1- 2 903 059
- US-A- 5 460 900

## Beschreibung

### Technisches Gebiet

Die Erfindung betrifft ein wärmeisolierendes Gehäusesystem zur steuerbaren Temperierung von Akkumulatoren, insbesondere für Hochleistungsakkumulatoren. Die Erfindung betrifft insbesondere die Verwendung des erfindungsgemäßen Gehäusesystems und Verfahrens zur Kühlung von Traktionsakkumulatoren von elektrisch betriebenen Fahrzeugen.

### Stand der Technik

Elektrische Energiespeicher wie Batterien beruhen auf elektrochemischen Umsetzungsvorgängen, weshalb diese besonders temperaturempfindlich sind. Während zu niedrige Temperaturen zu einem starken Leistungseinbruch führen, ergeben sich bei hohen Temperaturen Schäden durch vorzeitige Alterung, die verbunden sind mit fortdauernden Leistungseinbußen. Die Temperatur der Batterie wird üblicherweise durch die Umgebung sowie durch die eigene Verlustwärme bestimmt. Es ist bekannt, zur Steuerung der Temperatur aktive Elemente wie Peltier-Elemente oder auch aktive kompressorbetriebene Kühlaggregate zu verwenden. Diese Lösungen sind jedoch mit aufwändigen Systemen verknüpft.

Ferner ist bekannt, Batterien mittels einer Medienströmung und einer entsprechenden Wärmesenke zu kühlen, beispielsweise durch eine Luftströmung oder durch einen Kühlkreislauf mit Kühlflüssigkeit. In einigen Hybridfahrzeugen werden Luftkühlung oder ein Kältekreislauf eingesetzt, der an eine Klimaanlage gekoppelt ist und somit Kompression und Verdampfung von Kältemittel vorsieht. Diese Verfahren erfordern jedoch eine ausreichende Medienströmung, die gegebenenfalls von einem Kompressor unterstützt wird, so dass sich zum einen bei geringfügiger Strömung eine geringe Kühlleistung ergibt und zum anderen insbesondere im Fall der Kühlung mittels einer Klimaan-lage bereits bestehende Komponenten zusätzlich belastet werden oder deutlich aufwändiger dimensioniert werden müssen.

Die Druckschrift FR 2 869 722 zeigt ein System zur thermischen Isolation einer Batterie, bei der innerhalb eines Gehäuses ein Material angeordnet ist, dessen Wärmewiderstand von dem umgebenden Luftdruck abhängt. Durch die Änderung des Luftdrucks wird daher die Wärmeleitfähigkeit des Materials geändert, so dass der Wärmeübertrag durch die Gehäusewände modulierbar ist. Die Modulationsbreite des spezifischen Wärmeleitwerts des Materials ist jedoch gering.

In der Druckschrift US 3,450,196 wird ein Gehäuse für Batterien in der Raumfahrt beschrieben, bei der sich in dem Gehäuse Wasserstoff befindet. Durch Änderung des Drucks wird der Wärmeübertrag durch den Wasserstoff hindurch gesteuert. Wie auch in der FR 2 869 722 ermöglicht die Vorrichtung der US 3,450,196 nur eine geringe Bandbreite des Wärmeübertrags, insbesondere aufgrund der begrenzten Wärmeleitfähigkeit des Wasserstoffs. Die aus dem Stand der Technik bekannten Maßnahmen ermöglichen nur eine geringe Modulationsbreite des steuerbaren Wärmeleitwerts.

Die US 5,460,900 offenbart ein doppelwandiges Batteriegehäuse mit Durchgängen für ein Kühlmedium zum Kühlen von Batterien.

Es ist daher eine Aufgabe der Erfindung, eine Vorrichtung und ein Verfahren vorzusehen, mit dem sich die Temperatur einer Batterie auf einfache Weise mit einer in weiten Bereichen einstellbaren Temperaturregelung temperieren zu können.

### Offenbarung der Erfindung

Diese Aufgabe wird gelöst durch das wärmeisolierende Gehäusesystem und das Verfahren gemäß den unabhängigen Ansprüchen.

Die Erfindung ermöglicht auf einfache Weise die Temperierung, d.h. Erwärmung oder Abkühlung einer Traktionsbatterie oder eines anderen Hochleistungsakkumulators, wobei gegebenenfalls die Temperatur in starkem Maße gesenkt und erhöht werden kann. Die Erfindung bietet eine Temperaturregelung mit einem gegenüber dem Stand der Technik deutlich erhöhten Wärmeübertrag, der jedoch auch auf ein Minimum verringert werden kann. Die erforderlichen Vorkehrungen sind auf einfache Weise zu realisieren und belasten insbesondere nicht die sonstigen Temperiersysteme eines Kraftfahrzeugs. Das erfindungsgemäße Gehäusesystem lässt sich ferner platzsparend in einem Kraftfahrzeug unterbringen und ermöglicht eine besonders hohe Wärmeabfuhr oder Wärmezufuhr, die mit herkömmlichen Systemen, die auf Gas basieren, nicht möglich sind. Gleichzeitig erlaubt die Erfindung eine effiziente Wärmeisolation, um beispielsweise zu verhindern, dass im Akkumulator anfallende Wärme innerhalb des Akkumulators verbleibt, wenn dessen Betriebstemperatur erhöht werden soll.

Das der Erfindung zugrunde liegende Konzept ist es, anstatt nur Gas auch Flüssigkeiten als Wärmeübertragungsmodulator zu verwenden, wobei Flüssigkeiten besonders einfach aus dem entsprechenden Zwischenraum abgeleitet werden können oder hinzugeführt werden können und einen hohen Wärmeleitwert ermöglichen, der sich mit Gasen nicht realisieren lässt. So kann durch Einpumpen der Flüssigkeit das Gehäuse schlagartig wärmeleitend vorgesehen werden, wenn beispielsweise die Wärmemenge nach außen abgeführt werden soll, oder wenn die Wärme der Umgebung zum Erwärmen des Akkumulators verwendet werden soll. Neben dem deutlich erhöhten maximalen Wärmeleitwert des Gehäuses kann das Gehäuse jedoch auch hochgradig wärmeisolierend wirken, so dass der wärmeisolierende Arbeitsbereich des Gehäuses keine geringere Wärmeisolation vorsieht als es der Stand der Technik mit evakuierten Zwischenräumen vorsieht.

Das erfindungsgemäße Gehäuse ist mit einer Doppelwand ausgeführt, die im Wesentlichen abgeschlossen ist, und deren Inhalt geändert wird, um die Isolationsfähigkeit bzw. die Wärmeübertragungsfähigkeit modulieren zu können. Das Gehäuse sieht einen Innenraum vor, der zur Aufnahme des Akkumulators geeignet ist, wobei ein innerer Wandabschnitt den Wärmekontakt zum Innenraum und somit zum Akkumulator ermöglicht. Da der innere Wandabschnitt der Doppelwand angehört, ergibt sich eine unmittelbare Wärmebrücke zwischen Zwischenraum und Innenraum bzw. dem Akkumulator. In vergleichbarer Weise umfasst das Gehäusesystem einen äußeren Wandabschnitt, der der Doppelwand angehört, und der eine unmittelbare Wärmebrücke für eine Wärmequelle bzw. Wärmesenke (insbesondere die Umgebung) vorsieht. Der Zwischenraum ist durch die Wandabschnitte vollständig abgeschlossen, bis auf einen Fluidanschluss, durch den die Befüllung des Zwischenraums geändert werden kann. Gegebenenfalls kann die Doppelwand mit einem Druckausgleichsventil versehen sein, um beim Entleeren und Befüllen einen Druckausgleich gegenüber der Umgebung zu ermöglichen.

In einem Fluidtank des Gehäusesystems ist Fluid vorgesehen, das über eine Fluidpumpe des Gehäusesystems in den Zwischenraum eingepumpt werden kann, oder von dem Zwischenraum entfernt werden kann. Die Fluidpumpe ist eingerichtet, den Füllstand der Flüssigkeit in dem Zwischenraum zwischen den Wandabschnitten der Doppelwand (und gegebenenfalls den Gasdruck in dem Zwischenraum) zu steuern. Dadurch wird der Wärmeübertrag zwischen innerem und äußeren Wandabschnitt über weite Bereiche steuerbar. Als Flüssigkeit wird insbesondere Wasser verwendet, vorzugsweise mit Frostschutzmittel wie Glykol versetzt (als Wasser-Glykol-Gemisch), um einen besonders hohen Wärmeübertrag zu gewährleisten. Beispielsweise bei der Verwendung von Wasser ergibt sich durch höhere Wärmeleitfähigkeit von ca. 0,6 W/(mK) ein deutlich besserer Wärmeübertrag zwischen Umgebung und Akkumulator im Vergleich zu beispielsweise Luft mit einer Wärmeleitfähigkeit von ca. 0,02 W/(mK). Der Wärmeübertrag lässt sich durch die Verwendung von Wasser daher gegenüber dem Stand der Technik um einen Faktor von mehr als 10, 20 oder mehr steigern. Insbesondere bei der Verwendung von Hochleistungsakkumulatoren ist ein hoher maximaler Wärmeübertrag notwendig, da alleine aufgrund der hohen Leistung der Akkumulatoren sich hohe Verlustwärmemengen ergeben.

Insbesondere umfasst das wärmeisolierende Gehäusesystem auch den Hochleistungsakkumulator selbst, dessen Außenfläche vorzugsweise unmittelbar wärmeleitend mit dem inneren Wandabschnitt der Doppelwand verbunden ist, insbesondere an dessen Fläche, die an den Innenraum angrenzt. Als unmittelbare Verbindung werden auch Wärmeverbindungen angesehen, die eine Wärmeleitpastenschicht oder ein Wärmepad umfassen. Zudem können Wärmespreizer innerhalb der Wärmebrücke vorgesehen werden, um die Wärmeübergangsfläche zu erhöhen.

Als modulierendes Wärmeleitmedium, das in den Zwischenraum eingefüllt wird und aus diesem herausgeleitet wird, kann Wasser verwendet werden, das gegebenenfalls mit Zusätzen versetzt ist. Der Zwischenraum der Doppelwand kann frei von Festkörpern sein oder kann wärmeisolierende Körper umfassen, die Kanäle, Poren oder Öffnungen aufweisen, die zum Zwischenraum offen sind und somit mit der Flüssigkeit befüllt werden können. In gleicher Weise dienen die Kanäle, Poren oder Öffnungen dazu, dass Wasser aus den wärmeisolierenden Körpern entfernt werden kann. Die wärmeisolierenden Körper umfassen beispielsweise Kieselsäure, Polystyrolschaum, Polyurethanschaum oder ein Glasfasergewebe. Die wärmeisolierenden Körper können sich innerhalb des gesamten Zwischenraums erstrecken oder können sich in einem Abschnitt erstrecken, wobei ein Spalt zwischen äußerem oder innerem Wandabschnitt und dem Abschnitt verbleibt, in dem die wärmeisolierenden Körper vorgesehen sind. Zur Unterstützung der Wärmeleitung können die Wandabschnitte in Form von Kunststoffschichten oder Metallschichten vorgesehen sein. Im Fall von Kunststoffschichten werden diese vorzugsweise dünn ausgeführt, insbesondere dünner als 5, 3 oder 2 mm, um unerwünschten Wärmestau aufgrund der Eigenschaften des Kunststoffmaterials zu vermeiden. Vorzugsweise ist das gesamte Gehäuse im Wesentlichen aus dem gleichen Material gefertigt, beispielsweise aus spritzgegossenem Kunststoff. Alternativ können die Wandabschnitte zusätzliche Metallplatten, Metallschichten oder Metallfolien umfassen, die an den Wandabschnitten vorgesehen sind, um den Wärmeübertrag zu verbessern. Die Wärmeschichten können in dem Gehäuse, welches aus Kunststoff vorgesehen ist, eingelassen sein oder können auf die entsprechenden Wandabschnitte des Kunststoffgehäuses aufgebracht sein.

Erfindungsgemäss umfasst das Gehäusesystem ferner eine Steuerung, die Eingänge aufweist, die zur Verbindung mit Temperatursensoren eingerichtet sind, welche wiederum am Hochleistungsakkumulator sowie am Äußeren des Gehäusesystems angeordnet sind. Alternativ kann das Gehäusesystem selbst die Sensoren umfassen, die mit der Steuerung verbunden sind, wobei diese Sensoren zum einen die Temperatur des Hochleistungsakkumulators sowie die Umgebungstemperatur erfassen. Die Steuerung umfasst ferner einen Ausgang, mit dem die Flüssigkeitspumpe verbunden ist. Die Steuerung ist eingerichtet, die Pumpe zum Befüllen und zum Entleeren des Zwischenraums anzusteuern. Je nachdem, ob die Temperatur des Akkumulators der Außentemperatur angepasst werden soll oder nicht, wird der Füllstand erhöht oder verringert. Wenn sich die Temperatur des Akkumulators in die Richtung der Temperatur der Umgebung bewegen soll, dann wird der Füllstand erhöht. Andernfalls wird der Füllstand verringert.

Erfindungsgemäss wird eine Temperaturvorgabe verwendet, die als Sollgröße für die Akkumulatortemperatur dient. Hat die Differenz zwischen der Akkumulatortemperatur und der Umgebung das gleiche Vorzeichen wie die Differenz zwischen Akkumulatortemperatur und Temperaturvorgabe, ist die Steuerung eingerichtet, die Flüssigkeit zur Erhöhung des Füllstands anzusteuern. Haben die Differenzen ein unterschiedliches Vorzeichen, so wird der Füllstand verringert. Die Steuerung kann die Temperaturvorgabe empfangen und weist vorzugsweise einen Vergleicher auf, um die Akkumulatortemperatur mit der Umgebungstemperatur und die Akkumulatortemperatur mit der Temperaturvorgabe zu vergleichen. Die Differenz zwischen Akkumulatortemperatur und Umgebungstemperatur und insbesondere dessen Vorzeichen gibt an, in welche Richtung sich die Akkumulatortemperatur entwickeln würde, wenn eine wärmeleitende Verbindung mit der Umgebungstemperatur hergestellt werden würde. Entspricht diese Entwicklungsrichtung der Sollrichtung, die durch die Differenz zwischen Akkumulatortemperatur und Temperaturvorgabe wiedergegeben wird, dann wird der Füllstand erhöht und somit der Wärmeübertrag vorgesehen. Die Steuerung ist vorzugsweise eingerichtet, den Füllstand binär vorzusehen, so dass entweder der Zwischenraum vollständig mit Flüssigkeit befüllt ist oder die Flüssigkeit vollständig aus dem Zwischenraum entfernt ist. In diesem Fall weist die Steuerung vorzugsweise eine Abschaltautomatik auf, die die Pumpe abstellt, wenn der Füllstand Null beträgt oder wenn der volle Füllstand erreicht wurde.

Neben der Modulierung mittels des Füllstands einer Flüssigkeit kann die Erfindung ferner eingerichtet sein zum zumindest teilweisen Evakuieren des Zwischenraums. Hierzu weist das Gehäusesystem eine Vakuumpumpe auf, die an den Zwischenraum angeschlossen ist und eingerichtet ist, den Druck der Luft innerhalb des Zwischenraums zu verringern, insbesondere auf 50%, 20%, 10%, 5%, 1% oder 0,5% des Normaldrucks (1,01325 bar bei 20°C). Die Vakuumpumpe kann separat von der Flüssigkeitspumpe vorgesehen sein. In einer alternativen Ausführungsform ist die Flüssigkeitspumpe eingerichtet, den Zwischenraum auch zu evakuieren. In diesem Fall ist die Vakuumpumpe und die Flüssigkeitspumpe durch ein und dieselbe Pumpe dargestellt, beispielsweise eine Kolbenpumpe oder Ähnliches. Der Füllstand der Flüssigkeit wird zwischen 0 % und 100 % gesteuert. Ein Flüssigkeitsfüllstand von 0 % umfasst auch einen leeren Zwischenraum (im Wesentlichen mit Gas befüllt), wenn dieser noch einige Tropfen oder Reste alter Flüssigkeit enthält.

Das Gehäusesystem weist vorzugsweise eine Vielzahl von Innenraum auf, die wie oben beschrieben mit Doppelwänden umgeben sind. Das Gehäuse ist vorzugsweise in Quaderform, wobei zumindest eine Seite als Doppelwand ausgeführt ist. Wenn das Gehäusesystem mehrere Innenräume umfasst, so sind die Innenräume durch die Doppelwände voneinander getrennt. Vorzugsweise sind die Zwischenräume mehrerer Doppelwände miteinander verbunden. In einer bevorzugten Ausführungsform ist das Gehäusesystem quaderförmig, wobei alle in einer Umlaufrichtung aufeinander folgenden Seiten als Doppelwände ausgestaltet sind, wobei der Boden oder auch der Deckel nicht als Doppelwand ausgeführt sind. Bevorzugt ist jedoch auch der Boden als Doppelwand ausgeführt, um eine entsprechende Kühlung zu ermöglichen. Zwischen Akkumulator und Wandabschnitt kann ein wärmeübertragendes Element vorgesehen sein, so dass die Batterien nicht präzise in den Innenraum eingepasst werden müssen, sondern das wärmeübertragende Element nach dem Einfügen des Akkumulators eingefügt werden kann, um dadurch die Wärmebrücke zu schließen. Weitere Ausführungsformen umfassen elastische Wandabschnitte, die sich durch den Wasserdruck zumindest leicht ausbeulen, um dadurch mittels Presssitz an den Akkumulator gedrückt zu werden.

Weitere Ausführungsformen berücksichtigen die Wärmekapazität des Wassers. Hierbei ist gegebenenfalls nicht erwünscht, dass die Temperatur der Flüssigkeit selbst wesentlichen Einfluss auf die Temperierung des Akkumulators hat. In derartigen Ausführungen ist das Volumen des Zwischenraums bzw. aller Zwischenräume nur ein Bruchteil des Volumens des Innenraums. Vorzugsweise hat der Zwischenraum eine geringe Breite von weniger als 5, 2, 1 oder 0,5 cm, wohingegen der Innenraum ein Vielfaches hiervon als Längen- oder Breitenmaß hat. Der Innenraum hat somit vorzugsweise eine Länge von mehr als 10 cm, mehr als 20 cm oder mehr als 50 cm. Das Volumenverhältnis aller Innenräume zu allen Zwischenräumen beträgt vorzugsweise mehr als 50:1, 100:1, 200:1, 500:1, 1000:1 oder mehr. Alternative Ausführungsformen berücksichtigen jedoch gezielt die Wärmekapazität der Flüssigkeit, die damit verbundene Kühlung, Erwärmung sowie Kühleffekte durch verdampfende Flüssigkeit, insbesondere wenn der Zwischenraum evakuiert (oder teilevakuiert) wird.

Die Erfindung wird ferner realisiert durch ein Verfahren zur gesteuerten Kühlung, wobei zunächst zumindest ein Hochleistungsakkumulator in dem Innenraum angeordnet wird und wärmeleitend mit einem inneren Wandabschnitt der Doppelwand verbunden wird. Der Wärmeübertrag zwischen Hochleistungsakkumulator und Umgebung (über den inneren und äußeren Wandabschnitt durch den Zwischenraum, d. h. durch die Doppelwand hindurch) wird gesteuert durch Ändern des Füllstands der Flüssigkeit in dem Zwischenraum.

Der Füllstand wird geändert durch Befüllen oder Entfernen von Flüssigkeit aus dem Zwischenraum durch Pumpen der Flüssigkeit oder durch Ablassen der Flüssigkeit mittels eines Ventils. Wenn beispielsweise der Tank des Ventils über der Doppelwand vorgesehen ist, dann ist es ausreichend, dass ein Ventil geöffnet wird, um den Zwischenraum zu füllen. Der Tank weist vorzugsweise eine Belüftungsmechanik auf, so dass beim Befüllen des Zwischenraums Luft in den Tank geleitet wird und beim Leeren des Zwischenraums Luft aus dem Tank geleitet wird, vorzugsweise über ein Einwegventil. Da der Zwischenraum nur ein relativ geringes Volumen aufweist, beispielsweise 1-5 I und der Zwischenraum somit im Wesentlichen in Form einer dünnen Schicht vorgesehen ist, kann auch der Tank entsprechend klein ausgeführt sein und die Pumpe kann die gesamte Flüssigkeit des Tanks in kurzer Zeit vom Tank in den Zwischenraum und umgekehrt transportieren. Flüssigkeit wird somit verfahrensgemäß von einem an den Zwischenraum angeschlossenen Tank in diesen geleitet oder von diesem in den Tank geführt. Neben der Modulation durch den Füllstand der Flüssigkeit kann der Wärmeübertrag auch gesteuert werden, indem zusätzlich der Luftdruck gegenüber dem Normaldruck verringert wird. Die Luft wird entfernt, nachdem die Flüssigkeit aus dem Zwischenraum vollständig entfernt wurde, wobei hierbei die gleiche Pumpe wie bei der Förderung der Flüssigkeit verwendet werden kann oder es können verschiedene Pumpen verwendet werden. Um zu verhindern, dass bei getrennten Pumpen die Vakuumpumpe aktiviert wird, wenn sich noch Flüssigkeit in dem Zwischenraum befindet, kann in dem Zwischenraum ein Sensor vorgesehen sein, wobei verfahrensgemäß der Sensor abgefragt wird, ob sich noch Flüssigkeit in dem Zwischenraum befindet.

Neben Wasser können auch beliebige andere Flüssigkeiten als Wärmeübertragungsmediator verwendet werden, soweit diese eine spezifische Wärmekapazität von mehr als 0,03 oder 0,05 oder 0,1 W/m·K aufweisen. Ferner kann reines Wasser oder Wasser mit Zusätzen verwendet werden, wobei die Zusätze beispielsweise Salze sind, die die Wärmeleitfähigkeit noch weiter erhöhen und/oder Konservierungsstoffe sind, um zu gewährleisten, dass der Betrieb des Systems für längere Zeit gewährleistet bleibt.

### Kurze Beschreibung der Zeichnung

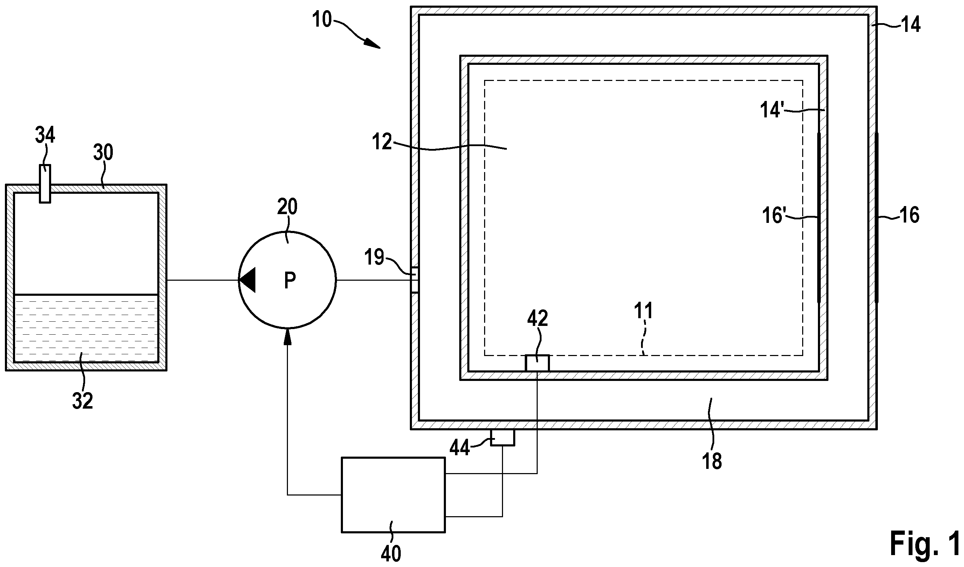

Die Figur 1 zeigt ein wärmeisolierendes Gehäusesystem gemäß der Erfindung.

### Detaillierte Beschreibung der Zeichnung

Figur 1 zeigt ein erfindungsgemäßes Gehäusesystem mit einem Gehäuse 10, einer Pumpe 20 und einem Tank 30. Das Gehäuse 10 umfasst einen Innenraum 12, dessen Maße und Proportionen zur Aufnahme eines Akkumulators, beispielsweise eines bestimmten Akkumulatortyps, eingerichtet ist. Das Gehäuse 10 umfasst eine Doppelwand 14, 14', wobei die Innenseite der Doppelwand 14' einen inneren Wandabschnitt 16' umfasst, und die äußere Wand der Doppelwand einen äußeren Wandabschnitt 16 umfasst. Die Doppelwand ist umlaufend und definiert einen zusammenhängenden Zwischenraum 18, der zwischen Innenwand 14' und Außenwand 14 ausgestaltet ist. Der Zwischenraum 18 ist im Wesentlichen abgeschlossen, wobei eine Öffnung 19 einen Fluidanschluss zum Befüllen und Entleeren des Zwischenraums 18 vorsieht.

An den Anschluss 19 ist die Pumpe 20 angeschlossen, die wiederum mit einem Tank 30 verbunden ist. Die Pumpe 20 kann in beide Richtungen betrieben werden und somit Wasser 32 des Tanks 30 in den Zwischenraum 18 pumpen und Wasser von dem Zwischenraum 18 in den Tank 30 pumpen.

Zum Druckausgleich umfasst der Tank ferner ein Druckausgleichventil 34, um zum einen die Druckzunahme innerhalb des Tanks 30 durch die Raumnahme eingepumpter Flüssigkeit 32 auszugleichen, und um zum anderen beim Abpumpen der Flüssigkeit 32 einen Druckausgleich durch Zufuhr von Luft von außen zu ermöglichen. Obwohl die Pumpe 20 als Hydraulikpumpe dargestellt ist, ist diese vorzugsweise auch geeignet, um Gas zu pumpen, insbesondere von dem Zwischenraum 18 in den Tank oder vorzugsweise in die Umgebung, um dadurch den Zwischenraum 18 zu evakuieren und einen Wärmefluss weitergehend zu unterbinden.

Die Pumpe 20 wird von einer Steuerung 40 angesteuert, die mit einem ersten Temperatursensor 42 verbunden ist, der im Innenraum 12 angeordnet ist, und die mit einem Außenraumsensor 44 zur Erfassung der Umgebungstemperatur eingerichtet ist. Die Steuerung umfasst ferner einen Vergleicher sowie eine Eingabe oder einen Speicher (ebenfalls nicht dargestellt) für eine Temperaturvorgabe, um erfindungsgemäß zu ermitteln, ob der Zwischenraum mit Wasser gefüllt sein soll, oder wärmeisolierend vorgesehen sein soll, d.h. mit einem Füllstand von Null. Die Temperaturvorgabe kann insbesondere in einem nur Lesespeicher der Steuerung 40 abgelegt sein und entspricht der Mindestbetriebstemperatur des Akkumulators, der sich in dem Innenraum 12 befindet.

## Patentansprüche

1. Wärmeisolierendes Gehäusesystem mit einem Gehäuse (10), das einen Innenraum (12) eingerichtet zur Aufnahme eines Akkumulators (11) umfaßt, wobei das Gehäuse eine Doppelwand umfasst, in der ein Zwischenraum (18) vorgesehen ist, wobei Zwischenraum über mindestens einen inneren Wandabschnitt (14') der Doppelwand mit dem Innenraum wärmeleitend verbunden ist, der Zwischenraum über mindestens einen äußeren Wandabschnitt (14) der Doppelwand mit der Umgebung des Gehäuses verbunden ist, und der Zwischenraum bis auf einen Fluidanschluß (19) vollständig abgeschlossen ist, **dadurch gekennzeichnet, dass** Gehäusesytem ferner eine mit dem Fluidanschluß verbundene Flüssigkeitspumpe (20) und einen Flüssigkeitstank (30) mit Flüssigkeit (32) umfasst, der über die Flüssigkeitspumpe (20) mit dem Zwischenraum (18) verbunden ist, wobei die Flüssigkeitspumpe (20) eingerichtet ist, den Füllstand der Flüssigkeit in dem Zwischenraum zwischen den Wandabschnitten (16, 16') der Doppelwand zu steuern, **gekennzeichnet durch** eine Steuerung (40), die zur Erfassung der Akkumulatortemperatur des Akkumulators (11) und der Umgebungstemperatur eingerichtet ist, wobei die Steuerung ferner zur Ansteuerung der Flüssigkeitspumpe (20) und zur Berücksichtigung einer Temperaturvorgabe eingerichtet ist, wobei die Steuerung eingerichtet ist, die Flüssigkeitspumpe zur Erhöhung des Füllstands anzusteuern, wenn die Differenz zwischen Akkumulatortemperatur und Umgebungstemperatur das gleiche Vorzeichen hat, wie die Differenz zwischen Akkumulatortemperatur und Temperaturvorgabe, und eingerichtet ist, die Flüssigkeitspumpe zur Verringerung des Füllstandes anzusteuern, wenn die Differenz zwischen Akkumulatortemperatur und Umgebung das entgegengesetzte Vorzeichen hat, wie die Differenz zwischen Akkumulatortemperatur und Temperaturvorgabe.

2. Wärmeisolierendes Gehäusesystem nach Anspruch 1, das ferner einen Akkumulator umfasst, dessen Außenfläche wärmeleitend mit dem inneren Wandabschnitt (14') der Doppelwand verbunden ist, wobei durch den Füllstand der Flüssigkeit der Wärmeübertrag zwischen Akkumulator und Umgebung durch den Zwischenraum (18) hindurch einstellbar ist.

3. Wärmeisolierendes Gehäusesystem nach Anspruch 1, wobei die Flüssigkeit (32) Wasser ist und der Zwischenraum frei von Festkörpern ist oder mit wärmeisolierenden Körpern gefüllt ist, die Kanäle, Poren oder Öffnungen aufweisen, die zu dem Zwischenraum offen sind, so dass Wasser in die Kanäle, Poren oder Öffnungen eindringen kann, wenn der Füllstand erhöht wird, und die Wandabschnitte (14, 14') dünne, wärmeleitende Kunststoffschichten oder Metallschichten umfassen, welche dünner als 5mm sind.

4. Gehäusesystem nach einem der vorangehenden Ansprüche, das ferner eine Vakuumpumpe (20) umfasst, die an den Zwischenraum (18) angeschlossen ist und eingerichtet ist, den Druck von in dem Zwischenraum vorliegende Luft zu verringern, insbesondere auf weniger als 50 %, 20 %, 10 %, 5%, 1 % oder 0.1 % des Normaldrucks.

5. Verfahren zur gesteuerten Kühlung eines Akkumulators mit den Schritten: Anordnen des Akkumulatoren in einen Innenraum (12) eines Gehäuses (10) mit einer Doppelwand, innerhalb der sich ein Zwischenraum erstreckt, wobei der Akkumulator durch das Anordnen wärmeleitend mit einem inneren Wandabschnitt der Doppelwand verbunden ist, Steuern eines Wärmeübertrags von dem Akkumulator (11) über den inneren Wandabschnitt (14') und über einen an eine Umgebung des Gehäuses angrenzenden äußeren Wandabschnitt (14) der Doppelwand an die Umgebung, wobei der Wärmeübertrag durch Ändern eines Füllstands einer Flüssigkeit in dem Zwischenraum (18) gesteuert wird, die sich zwischen dem inneren und dem äußeren Wandabschnitt erstreckt, **gekennzeichnet durch** eine zur Erfassung der Akkumulatortemperatur des Akkumulators (11) und der Umgebungstemperatur eingerichtete Steuerung (40), wobei die Steuerung (40) ferner zur Ansteuerung der Flüssigkeitspumpe (20) und zur Berücksichtigung einer Temperaturvorgabe eingerichtet wird, wobei die Steuerung eingerichtet wird, die Flüssigkeitspumpe zur Erhöhung des Füllstands anzusteuern, wenn die Differenz zwischen Akkumulatortemperatur und Umgebungstemperatur das gleiche Vorzeichen hat, wie die Differenz zwischen Akkumulatortemperatur und Temperaturvorgabe, und eingerichtet wird, die Flüssigkeitspumpe zur Verringerung des Füllstands anzusteuern, wenn die Differenz zwischen Akkumulatortemperatur und Umgebung das entgegengesetzte Vorzeichen hat, wie die Differenz zwischen Akkumulatortemperatur und Temperaturvorgabe.

6. Verfahren nach Anspruch 5, wobei das Steuern umfasst: Einfüllen von Flüssigkeit zur Erhöhung des Füllstands und Entfernen von Flüssigkeit zur Verringerung des Füllstands durch Pumpen der Flüssigkeit und/oder durch Ändern des Öffnungszustands eines Ventils.

7. Verfahren nach Anspruch 5 oder 6, wobei die Flüssigkeit zum Steuern des Wärmeübertrags von einem an den Zwischenraum (18) angeschlossenen Tank (30) in den Zwischenraum geleitet wird oder von dem Zwischenraum in den Tank (30) geleitet wird.

8. Verfahren nach Anspruch 5, 6 oder 7, wobei das Steuern des Wärmeübertrags umfasst: Ändern eines Luftdrucks innerhalb des Zwischenraums durch Verringern des Luftdrucks, insbesondere auf weniger als 50 %, 20 %, 10 %, 5%, 1 % oder 0.1 % des Normaldrucks, durch Abpumpen von Luft aus dem Zwischenraum (18), wobei der Luftdruck nur dann verringert wird, wenn sich in dem Zwischenraum im wesentlichen keine Flüssigkeit befindet.

## Claims

1. Thermally insulating housing system having a housing (10) which comprises an internal space (12) configured to accommodate a storage battery (11), wherein the housing comprises a double wall in which an intermediate space (18) is provided, wherein the intermediate space is connected in a thermally conductive fashion to the internal space via at least one internal wall section (14') of the double wall, the intermediate space is connected to the surroundings of the housing via at least one external wall section (14) of the double wall, and the intermediate space is completely closed off with the exception of a fluid connection (19), **characterized in that** the housing system also comprises a fluid pump (20), connected to the fluid connection, and a fluid tank (30) with fluid (32), which fluid tank (30) is connected to the intermediate space (18) via the fluid pump (20), wherein the fluid pump (20) is configured to control the filling level of the fluid in the intermediate space between the wall sections (16, 16') of the double wall, **characterized by** a controller (40) which is configured to detect the storage battery temperature of the storage battery (11) and the ambient temperature, wherein the controller is also configured to actuate the fluid pump (20) and to take into account a predefined temperature value, wherein the controller is configured to actuate the fluid pump in order to increase the filling level if the difference between the storage battery temperature and the ambient temperature has the same sign as the difference between the storage battery temperature and the predefined temperature value, and is configured to actuate the fluid pump in order to reduce the filling level if the difference between the storage battery temperature and surroundings has the opposite sign to the difference between the storage battery temperature and the predefined temperature value.

2. Thermally insulating housing system according to Claim 1, which also comprises a storage battery whose external surface is connected in a thermally conductive fashion to the internal wall section (14') of the double wall, wherein the transfer of heat between the storage battery and the surroundings through the intermediate space (18) can be adjusted by means of the filling level of the fluid.

3. Thermally insulating housing system according to Claim 1, wherein the fluid (32) is water and the intermediate space is free of solids or is filled with thermally insulating bodies which have ducts, pores or openings which are open to the intermediate space so that water can penetrate the ducts, pores or openings when the filling level is raised, and the wall sections (14, 14') comprise thin, thermally conductive plastic layers or metal layers which are thinner than 5 mm.

4. Housing system according to one of the preceding claims, which housing system also comprises a vacuum pump (20) which is connected to the intermediate space (18) and is configured to reduce the pressure of air present in the intermediate space, in particular to less than 50%, 20%, 10%, 5%, 1% or 0.1% of the normal pressure.

5. Method for the controlled cooling of a storage battery with the steps: arrangement of the storage battery in an internal space (12) of a housing (10) with a double wall within which an intermediate space extends, wherein the storage battery is connected in a thermally conductive fashion to an internal wall section of the double wall as a result of the arrangement, controlling a transfer of heat from the storage battery (11) to the surroundings via the internal wall section (14') and via an external wall section (14) of the double wall, said external wall section (14) adjoining the surroundings of the housing, wherein the transfer of heat is controlled by changing a filling level of a fluid in the intermediate space (18), which fluid extends between the internal wall section and the external wall section, **characterized by** having a controller (40) configured to detect the storage battery temperature of the storage battery (11) and the ambient temperature, wherein the controller (40) is also configured to actuate the fluid pump (20) and to take into account a predefined temperature value, wherein the controller is configured to actuate the fluid pump in order to increase the filling level if the difference between the storage battery temperature and the ambient temperature has the same sign as the difference between the storage battery temperature and the predefined temperature value, and is configured to actuate the fluid pump in order to reduce the filling level if the difference between the storage battery temperature and surroundings has the opposite sign to the difference between the storage battery temperature and the predefined temperature value.

6. Method according to Claim 5, wherein the control process comprises filling in fluid in order to raise the filling level and removal of fluid in order to reduce the filing level by pumping the fluid and/or changing the opening state of a valve.

7. Method according to Claim 5 or 6, wherein in order to control the transfer of heat the fluid is conducted from a tank (30) connected to the intermediate space (18) into the intermediate space or is conducted from the intermediate space into the tank (30).

8. Method according to Claim 5, 6, or 7, wherein the controlling of the transfer of heat comprises changing an air pressure within the intermediate space by reducing the air pressure, in particular to less than 50%, 20%, 10%, 5%, 1% or 0.1% of the normal pressure by pumping air out of the intermediate space (18), wherein the air pressure is reduced only when there is essentially no fluid in the intermediate space.

## Revendications

1. Système de boîtier thermo-isolant avec un boîtier (10) qui comprend un espace intérieur (12) aménagé pour recevoir un accumulateur (11), le boîtier comprenant une double paroi dans laquelle est prévu un interstice (18), l'interstice étant relié de manière thermoconductrice par l'intermédiaire d'au moins une partie de paroi (14') intérieure de la double paroi avec l'espace intérieur, l'interstice étant relié avec l'environnement du boîtier par l'intermédiaire d'au moins une partie de paroi (14) extérieure de la double paroi et hormis un raccord de fluide (19), l'interstice étant complètement clos, **caractérisé en ce que** le système de boîtier comprend en outre une pompe à liquide (20) reliée avec le raccord de fluide et un réservoir à liquide (30) avec du liquide (32) qui par l'intermédiaire de la pompe à liquide (20) est relié avec l'interstice (18), la pompe à liquide (20) étant aménagée pour commander le niveau de remplissage du liquide dans l'interstice entre les parties de paroi (16, 16') de la double paroi, **caractérisé par** un système de commande (40) qui est aménagé pour détecter la température d'accumulateur de l'accumulateur (11) et la température ambiante, le système de commande étant aménagé en outre pour amorcer la pompe à liquide (20) et pour prendre en compte une consigne de température, le système de commande étant aménagé en outre pour amorcer la pompe à liquide pour relever le niveau de remplissage si la différence entre la température de l'accumulateur et la température ambiante est précédée du même signe que la différence entre la température de l'accumulateur et la consigne de température et est aménagé pour amorcer la pompe à liquide pour abaisser le niveau de remplissage si la différence entre la température de l'accumulateur et l'environnement est précédée du signe opposé à celui de la différence entre la température de l'accumulateur et la consigne de température.

2. Système de boîtier thermo-isolant selon la revendication 1, qui comprend en outre un accumulateur dont la surface extérieure est reliée de manière thermo-conductrice avec la partie de paroi (14') intérieure de la double paroi, la transmission thermique entre l'accumulateur et l'environnement à travers l'interstice (18) étant réglable via le niveau de remplissage du liquide.

3. Système de boîtier thermo-isolant selon la revendication 1, le liquide (32) étant de l'eau et l'interstice étant libre de corps solides ou rempli de corps thermo-isolants qui comportent des canaux, des pores ou des orifices qui sont ouverts sur l'interstice, de telle sorte que de l'eau puisse pénétrer dans les canaux, les pores ou les orifices lorsqu'on relève le niveau de remplissage et les parties de paroi (14, 14') comprenant de minces couches de matière plastique ou couches de métal thermo-conductrices, lesquelles sont plus minces que 5 mm.

4. Système de boîtier selon l'une quelconque des revendications précédentes, qui comprend en outre une pompe à vide (20) qui est raccordée sur l'interstice (18) et qui est aménagée pour réduire la pression d'air présent dans l'interstice, notamment à moins de 50 %, 20 %, 10 %, 5 %, 1 % ou 0,1 % de la pression normale.

5. Procédé de refroidissement commandé d'un accumulateur, comportant les étapes : du placement de l'accumulateur dans un espace intérieur (12) d'un boîtier (10) avec une double paroi, à l'intérieur de laquelle s'étend un interstice, par le placement, l'accumulateur étant relié de manière thermo-conductrice avec une partie de paroi intérieure de la double paroi, de la commande d'une transmission thermique de l'accumulateur (11) vers l'environnement, via la partie de paroi (14') intérieure et via une partie de paroi (14) extérieure de la double paroi, adjacente à un environnement du boîtier, la transmission thermique étant commandée par variation d'un niveau de remplissage d'un liquide dans l'interstice (18) qui s'étend entre la partie intérieure et la partie extérieure de paroi, **caractérisé par** un système de commande (40) aménagé pour détecter la température d'accumulateur de l'accumulateur (11) et la température ambiante, le système de commande (40) étant aménagé en outre pour amorcer la pompe à liquide (20) et pour prendre en compte une consigne de température, le système de commande étant aménagé pour amorcer la pompe à liquide pour relever le niveau de remplissage si la différence entre la température de l'accumulateur et la température ambiante est précédée du même signe que la différence entre la température de l'accumulateur et la consigne de température et est aménagé pour amorcer la pompe à liquide pour abaisser le niveau de remplissage si la différence entre la température de l'accumulateur et l'environnement est précédée du signe opposé à celui de la différence entre la température de l'accumulateur et la consigne de température.

6. Procédé selon la revendication 5, la commande comprenant : le remplissage de liquide pour relever le niveau de remplissage et le retrait de liquide pour abaisser le niveau de remplissage par pompage du liquide et/ou par variation de la position d'ouverture d'une soupape.

7. Procédé selon la revendication 5 ou 6, pour commander la transmission thermique, le liquide étant dirigé dans l'interstice à partir d'un réservoir (30) raccordé sur l'interstice (18) ou de l'interstice dans le réservoir (30).

8. Procédé selon la revendication 5, 6 ou 7, la commande de la transmission thermique comprenant : la variation d'une pression d'air à l'intérieur de l'interstice par réduction de la pression d'air, notamment à moins de 50 %, 20 %, 10 %, 5 %, 1 % ou 0,1 % de la pression normale, par pompage d'air hors de l'interstice (18), sachant qu'on ne réduit la pression d'air que si sensiblement plus aucun liquide ne se trouve dans l'interstice.
